# EUROPEAN PATENT SPECIFICATION

(11) **EP 1 781 486 B1**
(45) Date of publication and mention of the grant of the patent: **13.10.2010**
(21) Application number: 05774161.3
(22) Date of filing: 02.08.2005
(51) Int. Cl.: B60N 2/12, B60N 2/22

(54) **A VEHICLE RECLINER**
NEIGUNGSVERSTELLER FÜR FAHRZEUG
DISPOSITIF D' INCLINAISON POUR VEHICULE

(30) Priority: 13.08.2004 KR 2004023171 U; 13.08.2004 KR 2004063844
(43) Date of publication of application: 09.05.2007
(73) Proprietor: KM & I Co., Ltd, Incheon-City 404-254 (KR)
(72) Inventor: HEO, Chang-Beom, Incheon-City 405-230 (KR)
(74) Representative: Banzer, Hans-Jörg
(86) International application number: PCT/KR2005/002515
(87) International publication number: WO 2006/016750

(56) References cited:
- EP-A- 1 197 377
- EP-A2- 1 215 076
- JP-A- 2002 119 349
- JP-A- 2003 009 978
- KR-A- 19980 049 859
- US-A- 6 024 410
- US-A1- 2004 066 078
- US-A1- 2005 140 196
- US-B1- 6 474 740

## Description

### Technical Field

The present invention relates to a seat recliner for a vehicle, in particular, a seat recliner for a vehicle which is capable of being tightly engaged with gears without any moving space at the time of adjusting the rotation angle of the back of a seat for a vehicle.

### Background Art

In general, a seat recliner for a vehicle is employed for adjusting the rotation angle of the back of a seat installed in a vehicle.

Seats are installed in a vehicle for a driver and co-passengers to sit on, and especially seats for the driver and the assistant driver can be moved forwardly and rearwardly by means of transporting rails installed in the bottom surface of the vehicle body. Accordingly, when the seats for the driver and the assistant driver are fabricated, the back of the seat and the seat cushion are separately fabricated, and the angle of the back of the seat can be freely adjusted by means of the actuation of the seat recliner located between them, so that the driver and the assistant driver can take their seats comfortably and safely by adjusting positions of the seats and the angles of the back of the seats properly depending on their body shapes.

There have been several types of conventional seat recliner for a vehicle.

One of them is the seat recliner for the vehicle disclosed in Korean Utility Model Registration No. 313604, bearing the application number 20-2003-004703 dated 18 February 2003 and corresponding to the preamble of claim 1.

In the conventional seat recliner for vehicle as explained above, an actuating cam pushes out a lock gear supported by a lock gear supporting portion of a holder outwardly on condition that it is located at the outer peripheral side by means of restoring force of a return spring, respective end of which being fixed to the actuating cam and the holder at the state of wound around the rotation shaft, so that the outside gear teeth formed at the outside side of the lock gear supporting portion can be engaged with an inside gear teeth formed at the inner peripheral edge of a sector gear to thereby stop rotation of the sector gear fixed to the back of the seat. As a result, the back of the seat can be maintained at desired angles. Then, the angles of the back of the seat can be freely adjusted through the rotation of the sector gear fixed to the back of the seat according to the separation between the outside gear teeth and the inside gear teeth, as the lock gear is pushed inwardly based on the rotation angle of the actuating cam urging the lock gear by the rotation of the rotation shaft, when a lever connected to the rotation shaft is held and pulled. Further, when the outside force applied to the lever is relieved after the completion of the angle adjustment of the back of the seat, the actuating cam pushes again the lock gear to the outside by means of the storing force of the return spring to thereby make the outside gear teeth and the inside gear teeth engaged with each other to result in maintenance of the fixed state of the back of the seat.

Such conventional seat recliner for the vehicle has been constructed and operated as follows. The lock gear is configured to move along transporting support surfaces of the seat recliner with regard to its center point after the lock gear to be located to contact with the first, second and the third transporting surfaces of the seat recliner having an arc shape. Further, the lock gear is provided with a relief projection and an engaging projection at respective inside end thereof and is moved by means of an actuating projection of the actuating cam, and the outside gear teeth of the lock gear are maintained to be tightly engaged with the inside gear teeth of the sector gear by making the locking projection to be closely contacted with the actuating projection of the actuating cam.

When artificial force is not applied to the rotation shaft at a state of fixing the back of the seat, the actuating projection of the actuating cam pushes the inner peripheral surface of the lock gear to the outside by means of the restoring force of the return spring so as to move the lock gear to the outside direction with regard to the first transporting support surface to thereby make the outside gear teeth to be engaged with the inside gear teeth of the sector gear, and then when the outside gear teeth of the lock gear is engaged with the inside gear teeth of the sector gear, as the actuating projection is maintained to be closely contacted with the locking projection to make the lock gear to be engaged with the sector gear tightly.

Further, when the angle of the back of the seat is required to be adjusted, the actuating projection which presses the locking projection according to the rotation angle of the actuating cam as the actuating cam rotates to one direction, pushes the relief projection to the rotation direction, so that the lock gear can move along the first transporting support surface with regard to the center point to thereby separate the outside gear teeth from the inside gear teeth to result in proper adjustment of the angle of the back of the seat due to free rotation of the sector gear.

However, in the conventional locking state of the seat recliner for the vehicle, the inside gear teeth and the outside gear teeth are at the state of engagement after the lock gear is moved to the outside direction along the first transporting support surface with regard to the center point. In this state, the fixing projection and the actuating projection of the actuating cam are maintained to simultaneously push the inside surface of the lock gear and the locking gear to thereby engage tightly with the outside gear teeth portion and the inside gear teeth portion which are joining vertical portion of the center point of the actuating cam and the other center point. As explained above, in the locking state, the outside gear teeth portion and the inside gear teeth portion are caught by three lock gears arranged at identical degrees of 120.

In this instance, it is intended that the strength of the gear teeth can be improved by allowing the lock gear to be applied of the outside force vertically and distributing force to all the outside gear teeth of the lock gear while locating a rotation center of the lock gear, which is actuated by the actuating cam, to be on a center line on which the outside and inside gear teeth are engaged with each other, that is, which is perpendicular to the center line of the lock gear. However, because the supporting point of the actuating cam and the lock gear which are defined to produce the strength of the outside and inside gear teeth, which becomes the criteria for the stress of the cut-away portion of the gear teeth produced from the outside force, has been configured to be strayed off and to be located away from the center line of the lock gear, and the force produced from the outside force can not be distributed and transferred effectively to the driving center of the lock gear which is vertical to the center line of the lock gear, so that it is impossible to maximize the supporting force of the actuating cam with regard to the lock gear produced from the outside force to thereby distribute the force to the outside gear teeth in imbalance to result in reduction of the strength.

Furthermore, although the stress has been made to concentrate due to the outside force and the strength of the lock gear has been improved by making the actuating projection of the cam and the locking projection press the lock gear and the actuating cam respectively, such two point supporting force can only compensate for the strength with regard to the front load, that is, it can operate in a side direction with regard to the relief pressure of the gear teeth cut away portion, which is produced from the deformation of the holder supporting the lock gear and is concentrated on the gear teeth cut away portion along the load direction, and it can not compensate for the back load, so that the strength deviation of the seat recliner between the forward and backward direction becomes larger to thereby cause several defects in the products such as deterioration of the quality of the products, and the like in actual producing conditions.

In addition, the lock gear has the rotation shaft at place vertical to the center line of the gear teeth by means of the actuating cam, and it is driven along the inside supporting surface of the holder defining two arcs from the rotation center of the lock gear, so that moving interval can be adjusted and structure increasing the strength of the outside and inside gear teeth can be defined by making both sides of the lock gear contact in face to face relation. However, as the driving surface of the lock gear restraints both sides of the lock gear on the condition of contacting in face to face relation, space is formed between the lock gear and the holder supporting it to provide smooth operation and management of the moving interval to thereby result in formation of the moving interval during the operation.

### Disclosure of Invention

### Technical Problem

Accordingly, the present invention has been made to overcome above-mentioned problems occurring in the prior art, and it is an object of the present invention to provide a seat recliner for a vehicle which can be used without any damage and wear of the outside and inside gear teeth engaged with each other, as the turning force of the actuating cam can be directed to outside via mid point of the lock gear with regard to the centre of the actuating cam when the lock gear operated by the actuating cam engages with the inside gear teeth of the sector gear, to thereby make the outside gear teeth of the lock gear to be engaged with the inside gear teeth of the sector gear on condition of the same force being distributed to all the outside gear teeth of the lock gear so that lock gear can not be pushed in any one direction, although artificial force has been applied to the lock gear during the operation of the vehicle.

### [Technical Solution]

To accomplish the above objects, according to the present invention which is defined by the technical features set forth in claim 1, there is provided a seat recliner for a vehicle comprising a holder 300 equipped with a lock gear guide portion 330 having an arc shaped guide surface 331 in a receiving portion 320 opened at one side thereof, an upper gear 400 formed at the inside of the receiving portion 320 of the holder 300 and equipped with gear teeth at the inner 430 peripheral edge of the holder 300, an actuating cam 500 located in the holder 300 to be engaged with a rotation shaft 200 extending through the center of the holder 300 and having a transporting projection 510 and a first supporting projection 520 at predetermined intervals on the outer peripheral edge thereof, and a lock gear 600 provided with an outside gear teeth 610 at front surface and with a contacting surface 630, a first supporting surface 640 and an engagement surface 660 at a rear surface with the guide surface 331 of the lock gear guide portion 330 contacting with an outside of the lock gear 600, wherein the actuating cam 500 is provided with the transporting projection 510 at 120° intervals, both of which ends are provided with the first supporting projection 520 and the second supporting projection 530 respectively with regard to the transporting projection 510 of the actuating cam 500 so that the lock gear 600 can be supported at properly distributed in a radial direction and unbiased state, and the lock gear 600 is provided separately in trio to be supported by the three transporting projections 510 with the contacting surface 630 at the center thereof, both of which sides are provided with the first and the second supporting surfaces 640, 650 supported by the first and the second supporting projections 520, 530.

Furthermore, the first and second supporting projections 520, 530 of the actuating cam 500 are respectively located at a linear opposite position of the second supporting projection 530 of another adjoining transporting projection 510 and the first supporting projection 520 of the other transporting projection 510 around the center of the rotation shaft 200.

Also, the guide surface 331 of the lock gear guide portion 330 is formed to be an arc shape defined by the apex A of equilateral triangle, which makes vertical contact lines L at the center of the outside gear teeth 610 of the lock gear 600 divided into three parts around the center B of the rotation shaft 200.

Additionally, an inside contacting surface 440 bordering a hill portion of the inside gear teeth 430 is further formed at the inside gear teeth 430 of the upper gear 400 as high as the hill portion.

Meanwhile, a second engagement surface 670 is further formed at the actuating cam 500 so that the lock gear 600 by means of the second supporting projection 530 can be moved by extending the second supporting surface 650 of the lock gear 600 outwardly.

The above object and other object of the present invention, particular advantages and novel features of the present invention will be made apparent from the following concrete description of the preferred embodiment in connection with the appended drawings.

### Brief Description of the Drawings

FIG. 1 is an exploded perspective view for showing structure of a seat recliner for a vehicle according to the present invention;

FIG. 2 is a side cross-sectional view for showing engagement state of the seat recliner for the vehicle according to the present invention;

FIG. 3 is a planar view for showing operating state of the seat recliner for the vehicle according to the present invention at the time of locking;

FIG. 4 is a planar view for showing operating state of the seat recliner for the vehicle according to the present invention at the time of relief of locking;

FIG. 5 is a view for showing a locking state of the seat recliner for the vehicle according to the present invention, which shows a state of force distribution caused by application of pressure;

FIG. 6 is a planar view for showing another embodiment of the seat recliner for the vehicle according to the present invention at the time of relief of locking for rotating a back of a seat; and

FIG. 7 is a planar view for showing still another embodiment of the seat recliner for the vehicle according to the present invention at the time of rotation of the back of the seat.

100 : recliner 200 : rotation shaft

300 : holder 330 : lock gear guide portion

332 : recess 400 : upper gear

430 : inside gear teeth 500 : actuating cam

520, 530 : first and second supporting projections

600 : lock gear

640,650 : first and second supporting surfaces

### Best Mode for Carrying Out the Invention

Preferred embodiments of the seat recliner for the vehicle according to the present invention will now be described in detail with reference to the appended drawings below.

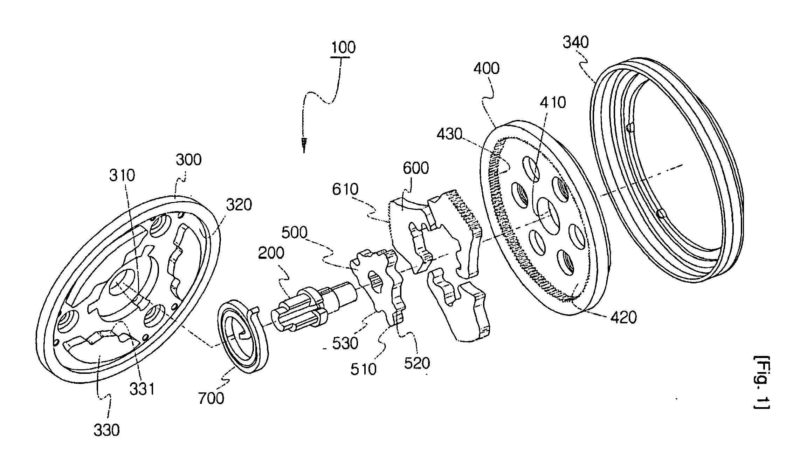

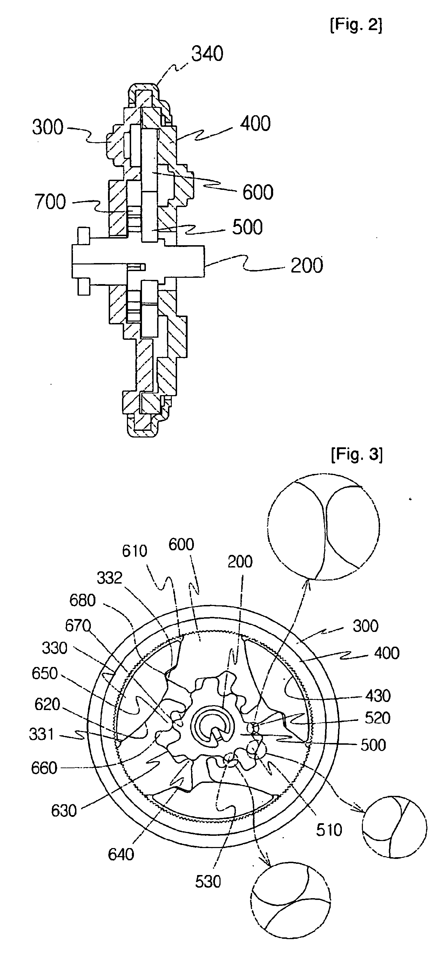

FIG. 1 is an exploded perspective view for showing structure of a seat recliner for a vehicle according to the present invention, and FIG. 2 is cross-sectional view for showing engagement state of the seat recliner for the vehicle according to the present invention. As shown in FIGs. 1 and 2, the seat recliner 100 for the vehicle of the present invention comprises a holder 300 and an upper gear 400 fixed respectively to a seat of the vehicle and back of the seat, and provided with respective through hole 310, 410 at center thereof so that a rotation shaft 200 can be passed through, an actuating cam 500 installed at front end of the rotation shaft, and a lock gear 600 located inside of the upper gear and is configured to lock and relieve the upper gear by moving inwardly or outwardly along the rotation direction of the actuating cam.

In this instance, at least two lock gears are provided at a desired interval, however, it is preferable that three lock gears are provided to maintain angle of 120 degree between them.

The holder 300 is provided with a receiving portion 320 opened at one side so that the upper gear 400 can be inserted and engaged in it, and a lock gear guide portion 330 at the receiving portion so that the lock gear 600 can move along the inner peripheral surface of the holder after it is engaged. Also, a cover 340 is provided to encase the holder and accommodate the upper gear in it when the upper gear 400 is assembled in the holder.

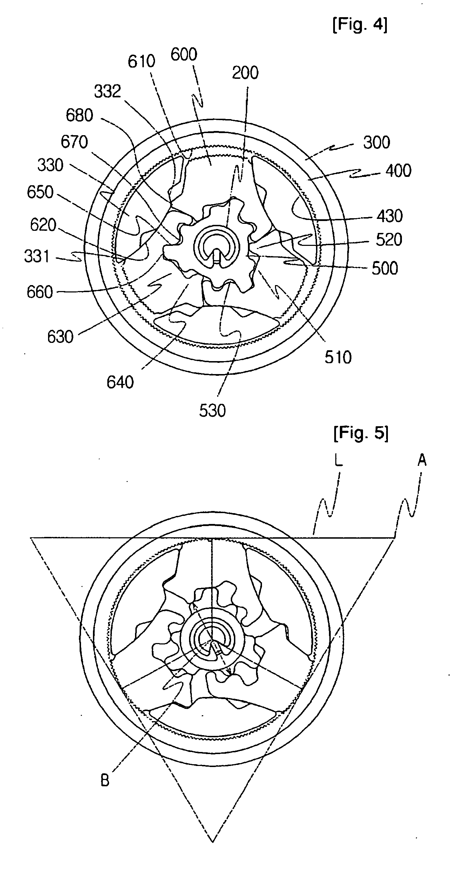

The lock gear guide portion 330 is provided with an arc-shaped guide surface 331 around the triangular points A formed by crossing of lines L vertical to the outside contacting surface of the lock gear, which is divided into three pieces around the rotation shaft, as shown in FIG. 5, so that the lock gear 600 provided between the guide surfaces can move inwardly or outwardly along the guide surfaces. Additionally, a recess 332 is also provided on at least one side of the guide surface so that contact points of the lock gear, which will be described later, can contact with it.

The upper gear 400 is provided with a receiving portion 420 opened at one side so that it can rotate freely with being inserted between the inner peripheral edge of the receiving portion 320 of the holder 300 and the outer peripheral edge of the lock gear guide portion 330, and an inside gear teeth 430 so that the lock gear can be engaged with the inner peripheral edge of the receiving portion 420.

The actuating cam 500 is fixed to the rotation shaft 200 at one end with the center thereof being inserted into and engaged with the rotation shaft, and the other end of the actuating cam is configured to rotate by means of the storing force of a return spring 700 fixed to the holder. Furthermore, the actuating cam 500 is provided with a transporting projection 510 at its outer peripheral surface for moving the lock gear 600 along the rotation direction, and first and second supporting projections 520, 530 at both sides of the transporting projection for holding both sides of the lock gear.

In this instance, as shown in FIG. 5, the transporting projection 510 is configured to be located at the mid of the lock gear 600 so as to push the lock gear 600 outwardly in the direction vertical to line L, and the first and the second supporting projections 520, 530 are configured to be engaged with the lock gear and maintain the locking state stably when artificial force (active load) is applied to the back of the seat. Further, the second supporting projection 530 is formed at a position opposing to that of the first supporting projection 520 linearly to thereby hold three lock gears 600 divided at predetermined intervals stably without any shake.

Meanwhile, as shown in FIG. 3 and FIG. 4, the respective lock gear 600 is provided with outside gear teeth 610 at whole peripheral surface for engaging with the inside gear teeth 430, an arc-shaped transporting surface 620 for engaging with the guide surface 331 of the lock gear guide portion 330 at an outside surface, an engaging surface 630 formed at an inside mid portion of the lock gear 600 for contacting with the transporting projection 510 at the time of locking, first and second supporting surfaces 640, 650 formed at both sides of the engaging surface for contacting with the first and second supporting projections 520, 530 at the time of application of active load, an engagement surface 660 formed at the inside of the second supporting surface for holding and moving the transporting projection 510 at the time of relieving the lock gear, and a contact projection 670 formed at one side opposing the transporting surface 620 for defining surface contact in the recess 332 of the guide surface 331 at the time of locking the inside gear teeth and the outside gear teeth.

Furthermore, a second engagement surface 670 is formed at extended portion of the second supporting surface 650 of the lock gear 600 for moving the lock gear by means of the second supporting projection 530 of the actuating cam so as to separate the inside and outside gear teeth at the time of relieving the locking state. Accordingly, if it is required to relieve the locking of the lock gear, it is possible to prevent damage and wear of the inside and outside gear teeth in spite of the rotation force of the upper gear, because the second supporting projection 530 at first pushes the second engagement surface 670 to move the lock gear so that the engaged inside and outside gear teeth can be separated from each other.

Now, assembled state of the seat recliner 100 for the vehicle according to the present invention, that is, a fixed state of the back of the seat mounted in the vehicle will be described below with regard to FIG. 3. In this state, the rotation shaft 200 rotates counterclockwise direction by means of the restoring force of the return spring 700, one end of the return spring being wound around and fixed to the rotation shaft and the other end of it being fixed to the holder 300, to thereby rotate the actuating cam 500 counterclockwise. As shown in FIG. 3, as the transporting projection 510 of the actuating cam 500 engages with the inside surface of the lock gear and rotates with it, the transporting surface 620 of the lock gear engages with the guide surface 331 and moves outwardly along an arc-shaped curve to maintain engagement of the outside gear teeth of the lock gear 600 with the inside gear teeth 430 of the upper gear 400. Accordingly, the moving space of the lock gear can be reduced to the minimum, because the contact projection 670 of the lock gear engages with the recess 332 formed at the opposite guide surface and the front end of the contact projection is maintained to be contacted with the guide surface. Also, as a result, the upper gear 400 is maintained at pause state without rotation and the angle of the back of the seat can be fixed.

Furthermore, when the angle of the back of the seat is to be adjusted, as shown in FIG. 4, the rotation shaft 200 is rotated by outside force to urge the return spring 700 wound around it thereby to rotate the actuating cam in the clockwise direction. Then the transporting projection 510 of the actuating cam can engage with the engagement surface 660 of the lock gear 600 and rotate to thereby move the transporting surface 620 of the lock gear 600 along the guide surface 331, so that the outside gear teeth 610 of the lock gear can be maintained to be spaced from the inside gear teeth 430 of the upper gear. In this instance, when the back of the seat is rotated to a desired angle by means of outside force, the upper gear 400 fixed to the back of the seat rotates to result in adjustment of the angle of the back of the seat. Then, when the outside force applied to the rotation shaft 200 by a lever is relieved, the actuating cam 500 rotates counterclockwise direction by means of the restoring force of the return spring 700 wound by force, so that the back of the seat can be fixed by maintaining the engagement of the outside gear teeth 610 of the lock gear 600 with the inside gear teeth 430 of the upper gear 400, as shown in FIG. 3.

Also, when the seat recliner of the vehicle according to the present invention is to be locked from the actuating state, as shown in FIG. 5, the lock gear 600 engaged with the transporting projection 510 is pushed up in the outward direction based on the rotation angle of the transporting projection 510 of the actuating cam 500. Then, the outside gear teeth 610 of the lock gear 600 is adapted to maintain the engagement with the inside gear teeth 430 of the upper gear 400, when the transporting projection 510 is located on the engaging surface 630. In this instance, as the engaging surface 630 is located at the mid position between the outside gear teeth 610 of the lock gear 600 and the lock gear 600, which is pushed to the outside by the transporting projection 510, produces vertical pushing force with regard to the center of the rotation shaft 200, it is possible to effectively suppress separation force produced between the inside and outside gear teeth by means of outside force.

Meanwhile, when the transporting projection 510 pushes the engaging surface 630 of the lock gear closely, the first and second supporting projections 520, 530 formed at opposite both sides of the transporting projection are maintained at adjacent positions without contacting with the first and second supporting surfaces 640, 650. In this instance, when clockwise force is applied to the back of the seat mounted at the vehicle because urgent stop, urgent start of the vehicle, or rear collision of the vehicles has occurred, the lock gear is pushed inwardly to make the second supporting surface 650 be pushed at the state of engagement with the second supporting projection 530 of the actuating cam, therefore, the first another supporting projection 520 formed at opposite side of the second supporting projection is maintained to be contacted with the first supporting surface 640 of the other lock gear. Furthermore, when counterclockwise force is applied to the back of the seat, the lock gear is pushed inwardly to make the first supporting surface 640 be pushed at the state of engagement with the first supporting projection 520 of the actuating cam. In this instance, as another second supporting projection 530 is maintained to be contacted with the second supporting surface 650 of the other lock gear to thereby transfer active force to the split lock gear, it is possible to use the seat recliner of the present invention without any damage or wear of the inside and outside gear teeth owing to the tight engagement of the lock gear.

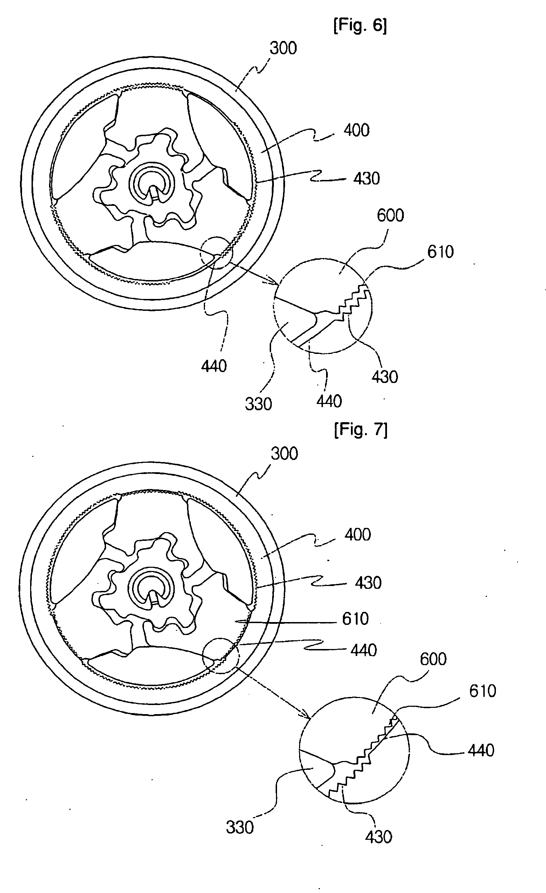

Hereinafter, the seat recliner of the vehicle according to another embodiment of the present invention will be described in connection with FIG. 6 and FIG. 7.

With regard to three-door vehicle such as a vehicle for sports, passengers boarding the vehicle at rear seats can board or get out of the vehicle using doors installed at driver's seat or assistant driver's seat after turning over the back of the driver's seat or the back of the assistant driver's seat, as shown in FIG. 6. When the back of the seat installed at the vehicle is to be turned over to the forward direction, an inside contacting surface 440 can be further formed at bordering portion of the hill portion of the inside gear teeth 430 so that the outside gear teeth 610 of the lock gear 600 cannot be engaged with the inside gear teeth 430 of the upper gear 400, when the back of the seat is only within a range of angle biasing forwardly from the vertical state.

As described above, when the back of the seat is turned over to the rearward direction from the vertical state, it is possible to adjust the angle of the back of the seat freely within the range of desired angle because the outside gear teeth 610 of the lock gear 600 is operated within operation range of the inside gear teeth 430 of the upper gear 400. Also, when a passenger is to board into rear seats of a vehicle or get off from them, the inside and outside gear teeth 430, 610 are separated from each other because the actuating cam 500 pulls the lock gear 600 in the inward direction by actuating the lever revolving the rotation shaft, so that the back of the seat can be turned over in the forward direction by means of the elastic force of the return spring 700 and the outside gear teeth 610 of the lock gear can be located on the second inside contacting surface 440 formed between the inside gear teeth 430, as shown in FIG. 7.

In this state, if the back of the seat is to be erected after the passenger has boarded the vehicle or has gotten off from the vehicle, the outside gear teeth 610 of the lock gear 600 cannot engage with the inside gear teeth 430 of the upper gear till the back of the seat reaches on the vertical line. Accordingly, if the back of the seat is rotated in the vertical direction artificially without any actuation of the lever, the outside gear teeth 610 engages with the inside gear teeth 430 when the upper gear 400 gets out of the inside contacting surface 440 completely to thereby maintain the state of erecting the back of the seat vertically. In this instance, if it is desired to rotate the back erected vertically in the rearward direction, it can be rotated as described above, so that the driver and the passenger can sit on the seats comfortably.

### Industrial Applicability

As described above, according to the seat recliner for the vehicle of the present invention, when the seat recliner is actuated to adjust the angle of the back of the seat, the actuating cam pushes the lock gear in the outward direction at a vertical state with regard to the center of the lock gear and holds the lock gear with distributing forces to both sides of the lock gear with regard to the center of the rotation shaft, so that the whole outside gear teeth provided at front of the lock gear can be engaged with the inside gear teeth of the upper gear at the equal distributed state of the force. Also, the second supporting projection for supporting other lock gear is formed at opposite portion of the first supporting projection with regard to the center of the rotation shaft to thereby hold the other lock gear located at diagonal line direction. Accordingly, it is possible to use the seat recliner for the vehicle without any damage or wear in the inside and outside gear teeth, because eccentricity of the lock gear does not occur despite the application of the outside artificial force. [63] Furthermore, the transporting surface is adapted to contact with the guide surface at one side, and the contact projection and the front end in the opposite side are adapted to contact with the recess formed at the other guide surface of the lock gear, so that it is possible to control the moving space between the lock gear effectively and support the lock gear stably under engagement of the inside and outside gear teeth.

## Claims

1. A seat recliner for a vehicle comprising a holder (300) equipped with a lock gear guide portion (330) having a guide surface (331) in a receiving portion (320) opened at one side thereof, an upper gear (400) formed at the inside of the receiving portion (320) of the holder (300) and equipped with gear teeth (430) at the inner peripheral edge of the holder (300), an actuating cam (500) located in the holder (300) to be engaged with a rotation shaft (200) extending through the center of the holder (300) and having a transporting projection (510) and a first supporting projection (520) at predetermined intervals on the outer peripheral edge thereof, and a lock gear (600) provided with an outside gear teeth (610) at front surface and with a contacting surface (630), a first supporting surface (640) and an engagement surface (660) at a rear surface with the guide surface (331) of the lock gear guide portion (330) contacting with an outside of the lock gear (600), wherein
the actuating cam (500) is provided with the transporting projection (510) at 120° intervals, both of which ends are provided with the first supporting projection (520) and the second supporting projection (530) respectively with regard to the transporting projection (510) of the actuating cam (500) so that the lock gear (600) can be supported at properly distributed in a radial direction and unbiased state, the lock gear (600) is provided separately in trio to be supported by the three transporting projections (510) with the contacting surface (630) at the center thereof, both of which sides are provided with the first and the second supporting surfaces (640, 650) supported by the first and the second supporting projections (520, 530), **characterised in that**
the lock gear guide portion (330) is provided with an arc-shaped guide surface (331) around the triangular point (A) formed by crossing of lines (L) vertical to the outside contacting surface of the lock gear.

2. The seat recliner according to claim 1, wherein the first and second supporting projections (520, 530) of the actuating cam (500) are respectively located at a linear opposite position of the second supporting projection (530) of another adjoining transporting projection (510) and the first supporting projection (520) of the other transporting projection (510) around the center (B) of the rotation shaft (200).

3. The seat recliner according to any one of claims 1 or 2, wherein an inside contacting surface (440) bordering a top portion of the inside gear teeth (430) is further formed at the inside gear teeth (430) of the upper gear (400).

4. The seat recliner according to any one of claims 1-3, wherein a second engagement surface (670) is further formed at the actuating cam (500) so that the lock gear (600) by means of the second supporting projection (530) can be moved by extending the second supporting surface (650) of the lock gear (600) outwardly.

## Patentansprüche

1. Sitzneigungsverstellvorrichtung für ein Fahrzeug, umfassend eine Haltevorrichtung (300), welche mit einem Verriegelungsgetriebeführungsabschnitt (330) mit einer Führungsfläche (331) in einem an einer Seite davon offenem Aufnahmeabschnitt (320) ausgestattet ist, ein oberes Getrieberad (400), welches an der Innenseite des Aufnahmeabschnitts (320) der Haltevorrichtung (300) ausgebildet ist und mit einer Getriebeverzahnung (430) an dem Innenumfangsrand der Haltevorrichtung (300) ausgestattet ist, einen Betätigungsnocken (500), welcher in der Haltevorrichtung (300) angeordnet ist, um sich mit einer Drehwelle (200) in Eingriff zu befinden, welche sich durch die Mitte der Haltevorrichtung (300) erstreckt, und welcher einen Transportvorsprung (510) und einen ersten Haltevorsprung (520) in vorbestimmten Abständen an dem Außenumfangsrand davon aufweist, und ein Verriegelungsgetriebe (600), welches mit einer Außenseitengetriebeverzahnung (610) an einer vorderen Fläche und mit einer Kontaktfläche (630), einer ersten Haltefläche (640) und einer Eingriffsfläche (660) an einer hinteren Fläche versehen ist, wobei die Führungsfläche (331) des Verriegelungsgetriebeführungsabschnitts (330) in Kontakt mit einer Außenseite des Verriegelungsgetriebes (600) ist, wobei
der Betätigungsnocken (500) mit dem Transportvorsprung (510) in 120° Abständen versehen ist, dessen beiden Enden mit dem ersten Haltevorsprung (520) bzw. dem zweiten Haltevorsprung (530) in Bezug auf den Transportvorsprung (510) des Betätigungsnockens (500) derart versehen sind, dass das Verriegelungsgetriebe (600) geeignet verteilt in einer radialen Richtung und einem nicht vorgespannten Zustand gehalten werden kann, wobei das Verriegelungsgetriebe (600) in einem Trio getrennt vorgesehen ist, um von den drei Transportvorsprüngen (510) mit der Kontaktfläche (630) in der Mitte davon gehalten zu werden, wobei beide Seiten davon mit der ersten und der zweiten Haltefläche (640, 650) versehen sind, welche von dem ersten und dem zweiten Haltevorsprung (520, 530) gehalten werden, **dadurch gekennzeichnet, dass**
der Verriegelungsgetriebeführungsabschnitt (330) mit einer bogenförmigen Führungsfläche (331) um den Dreieckspunkt (A) versehen ist, welcher von kreuzenden Linien (L) vertikal zu der Außenseitenkontaktfläche des Verriegelungsgetriebes gebildet wird.

2. Sitzneigungsverstellvorrichtung nach Anspruch 1, wobei der erste und der zweite Haltevorsprung (520, 530) des Betätigungsnockens (500) jeweils an einer linear gegenüberliegenden Position des zweiten Haltevorsprungs (530) eines weiteren angrenzenden Transportvorsprungs (510) und dem ersten Haltevorsprung (520) des weiteren Transportvorsprungs (510) um die Mitte (B) der Drehwelle (200) angeordnet sind.

3. Sitzneigungsverstellvorrichtung nach einem der Ansprüche 1 oder 2, wobei eine Innenseitenkontaktfläche (440), welche einen oberen Abschnitt der Innenseitengetriebeverzahnung (430) begrenzt, ferner an der Innenseitengetriebeverzahnung (430) des oberen Getrieberades (400) ausgebildet ist.

4. Sitzneigungsverstellvorrichtung nach einem der Ansprüche 1-3, wobei eine zweite Eingriffsfläche (670) an dem Betätigungsnocken (500) ferner derart ausgebildet ist, dass das Verriegelungsgetriebe (600) mittels des zweiten Haltevorsprungs (530) bewegt werden kann, indem die zweite Haltefläche (650) des Verriegelungsgetriebes (600) nach außen ausgeweitet wird.

## Revendications

1. Un dispositif pour incliner un siège pour véhicule comprenant un support (300) muni d'une portion de guidage d'engrenages ou organes dentés de verrouillage (330) présentant une surface de guidage (331) dans une partie de réception (320) ouverte sur un de ses côtés, un élément denté supérieur (400) formé à l'intérieur de la partie de réception (320) du support (300) et équipé de dents d'engrenage (430) disposée sur la tranche périphérique interne du support (300), une came d'actionnement (500) disposée dans le support (300) destinée à être en prise avec un arbre de rotation (200) s'étendant axialement par rapport au support (300) et comportant un doigt en saillie de transport (510) et une première portée de support (520) disposées à des intervalles prédéterminés sur la tranche périphérique extérieure de la came, et un élément denté de verrouillage (600) muni de dents extérieures d'engrenage (610) sur sa surface frontale et d'une surface de contact (630), une première surface de support (640) et une surface de mise en prise ou d'engrenage (660) sur la surface arrière avec la surface de guidage (331) de la portion de guidage d'engrenages ou organes dentés de verrouillage (330) en contact avec la partie externe de l'organe denté de verrouillage (600)
dans lequel,
la came d'actionnement (500) est munie de doigts en saillie de transport (510) situés à des intervalles de 120°, les deux extrémités de laquelle sont munies de la première portée de support (520) et de la seconde portée de support(530) respectivement par rapport au doigt en saillie pour le transport (510) de la came d'actionnement (500) de telle sorte que l'organe denté de verrouillage (600) puisse être supporté selon une distribution convenable dans une direction radiale et non biaisée, l'organe denté de verrouillage (600) est fourni séparément en trois parties destinées à être associées avec trois doigts en saillie pour le transport (510), la surface de contact (630) étant disposée centralement, et les deux côtés étant munis d'une première et d'une seconde surfaces de support (640, 650) supportées par les première et seconde portées de support (520, 530),
**caractérisé en ce que**
la portion de guidage des engrenages ou organes dentés de verrouillage (330) est munie d'une surface de guidage en forme d'arc (331) autour d'une zone triangulaire (A) formée par le croisement des lignes (L) tangentes à la surface de contact extérieure de l'organe denté de verrouillage.

2. Le dispositif pour incliner un siège selon la revendication 1, dans lequel les première et seconde portées de support (520, 530) de la came d'actionnement (500) sont respectivement situées au niveau d'une position opposée linéairement de la seconde portée de support (530) d'une autre portée de support attenante (510) et de la première portée de support (520) de l'autre doigt en saillie de transport (S10) autour du centre (B) de l'arbre de rotation (200).

3. Le dispositif pour incliner un siège selon l'une quelconque des revendications 1 ou 2, dans lequel une surface de contact intérieure (440) encadrant une portion sommitale des dents des engrenages intérieurs (430) est en outre formée au niveau de dents des organes dentés intérieurs (430) de l'élément denté supérieur (400).

4. Le dispositif pour incliner un siège selon l'une quelconque des revendications 1 à 3, dans lequel une seconde surface de mise en prise ou d'engrenage ou d'engrenage (670) est en outre formée au niveau de la came d'actionnement (500) de telle sorte que l'organe denté de verrouillage (600), au moyen de la seconde portée de support (530), peut être déplacée par le mouvement de la seconde surface de support (650) de l'organe denté de verrouillage (600) vers l'extérieur.
